# EUROPEAN PATENT SPECIFICATION

(11) **EP 1 327 557 B1**
(45) Date of publication and mention of the grant of the patent: **16.05.2007**
(21) Application number: 02380257.2
(22) Date of filing: 10.12.2002
(51) Int. Cl.: B60N 2/427

(54) **Headrest for automobile seats**
Kopfstütze für Kraftfahrzeugsitze
Appui-tête pour sièges d'automobile

(30) Priority: 14.01.2002 ES 200200074; 31.05.2002 ES 200201398; 31.05.2002 ES 200201399
(43) Date of publication of application: 16.07.2003
(73) Proprietor: Seat, S.A., 08040 Barcelona (ES)
(72) Inventor: Toyas Ruiz, Alberto, 08040 Barcelona (ES); Vizcaino Aloy, Oriol, 08040 Barcelona (ES)
(74) Representative: Davila Baz, Angel

(56) References cited:
- EP-A- 0 982 186
- EP-A- 1 122 122
- EP-A- 1 193 114
- DE-A- 3 900 495
- DE-A- 19 757 533

## Description

The present invention relates to a headrest assembly for automobile seats applicable to both front and back seats, of the type having two parallel columns mounted on the back of the seat which support a padded element intended to support the head.

In conventional headrest assemblies of the above described type, the padded element consists of a single piece which can be regulated in height and inclination to adapt to various user heights and be placed more or less near the user's head. However, once a position has been selected the padded element determines a passive element that will act as a support for the head when the head moves from the normal driving position to a rear position in which it comes in contact with the padded element.

This means that if the vehicle suffers a collision from the rear, in order for the headrest assembly to act as a support for the seat occupant's head it is necessary for the head to move backwards until reaching said padded element. This reduces the efficiency of the headrest assembly.

In order to prevent this problem headrest assemblies have been developed wherein the padded element consists of two parts, a front part and a rear part, at least the front part being displaceable from an inactive position where it is set against the rear part to define the general configuration of the headrest assembly, and a forward position where it is separated from the rear part and moved towards the head of the occupant of the seat. This displacement of the front part is achieved by a mechanism which is activated when the vehicle suffers a rear collision.

With this construction, the headrest assembly acts as an active element in the event of a rear collision, the front part of the headrest assembly moving towards the user's head, approaching it so that the distance travelled by the head until reaching the headrest assembly is reduced.

Headrest assemblies of the above-described type have been described, for example, in EP-A-112212 (corresponding to the preamble of claim 1), DE-A-3900495 and DE-A-19757533. In all of these cases the mechanism in charge of moving the front part of the headrest assembly relies on the displacement of an inertial mass, on the action of a spring or on the action of a hydraulic system. All of these systems have the problem of having a relatively slow response, which reduces the efficiency of the headrest assembly, as well as including relatively complex mechanisms.

EP-A-1122122 discloses a headrest assembly of the above-described type, wherein the padded element consists of two parts, a mobile front part and an upper fixed part, by which a fast response of the mobile part is achieved in the event that the automobile suffers a rear collision.

The padded element of the headrest assembly consists of a fixed rear body and a mobile front body. The fixed rear body is mounted directly on the parallel columns, while the mobile body is mounted on a horizontal shaft and can swivel about said horizontal shaft between a position of maximum proximity and one of maximum separation from the fixed rear body, being constantly pushed towards the position of maximum separation by one or more springs. The horizontal shaft is supported by a parallel crossbar fixed between the parallel columns by an intermediate connecting rod, incorporating retaining means for retaining the mobile front body in a position of maximum proximity to the fixed rear body and driving means for driving said mobile front body towards the position of maximum separation from the rear body, it being possible to deactivate said retaining means for retaining the front body.

The object of the present invention which is defined in claim 1 is a headrest assembly in which the mobile front body includes a frame comprising two plates mounted on the same horizontal shaft, i.e. a larger outer plate that will support the corresponding padded element and a smaller inner plate that rests on the larger plate. The smaller plate conforms a tubular shaft, inside which runs the horizontal shaft. The connecting rod between this shaft and the crossbar of the parallel columns is mounted on the tubular shaft of the smaller plate. On the same tubular shaft are mounted at least one torsion spring one of its ends being connected to the smaller plate and the other one of said ends being connected to the connecting rod, which is in charge of pushing the smaller plate against the larger one and furthermore to push both plates, with the padded element, towards the position of maximum separation from the rear body. The smaller plate is also provided with a tooth which is engaged by the hook actuated by the electromagnet.

According to a first example of embodiment the retaining means of the front body comprise a locking hook and an actuation electromagnet which are mounted on the connecting rod and a tooth which forms part of the smaller inner plate of the front body said tooth being arranged to be engaged by the hook, which is actuated by the electromagnet.

The two parallel columns will be connected at their upper end by an intermediate segment, defining an inverted-U shape between whose side arms runs the crossbar connected to the horizontal shaft.

The fixed rear body of the padded element is mounted on the top segment of the U-shape. Said body, as well as the plates that form part of the mobile front body, will be covered in foam and suitably upholstered, the assembly complying with corresponding standards for energy absorption and headrest assembly efficiency.

With the above-described construction, when a collision from the rear takes place this will be detected by sensors which will send a signal to the vehicle's electronic processor, which filters the signal and according to certain collision algorithms programmed in it will decide whether or not to activate the headrest electromagnet in order to release its mobile front body.

According to a second example of embodiment, the means for retaining the front body in its position of minimum separation from the fixed rear body consist of a magnet attached to the connecting rod and an iron-bearing core, which is part of the mobile front body and is located opposite said magnet. The iron-bearing core is surrounded by a coil which when activated creates a magnetic field of equal magnitude and opposite sign to that of the magnet, in order to counteract the effect of said magnet and release the mobile front body.

The aforementioned magnet which forms part of the means for retaining the front body in its position of minimum separation from the fixed rear body has a cup-shaped configuration inside which can be coupled the iron-bearing core when the mobile front body of the headrest assembly is in its position of minimum separation from the fixed rear body.

The iron-bearing core is mounted on the smaller plate and can adopt a conical configuration around which is wound the aforementioned coil.

According to a third example of embodiment, the means for retaining the front body in its position of minimum separation from the fixed rear body consist of the connecting rod itself, which links the horizontal shaft of said front body with the crossbar of the frame. For this purpose, the connecting rod tightly embraces both the horizontal shaft and the crossbar, so that the friction between these prevents the free swivelling of the front body. This system allows retaining the mobile front body of the padded element in the selected position.

The driving means of the mobile front body consists in turn of a pyrotechnic piston and a plunger that moves axially inside the chamber. The casing or chamber houses the pyrotechnic component and is mounted on the connecting rod by a hinge shaft parallel to the horizontal shaft of the front body. As regards the plunger, its external end rests on an opposing arched guide of the front body, being free to slide along said guide.

Said guide can be located on the plate which forms the frame of the front body. The guide can consist of a groove crossing the plate longitudinally, on which the end of the plunger rests and is free to slide.

The plunger of the pyrotechnic piston can be provided on its free end with a freely-rotating spherical body conforming a bearing by which it rests on the guide of the mobile front body, thereby facilitating its displacement or motion in said guide. The pyrotechnic piston can also be hinged between the connecting rod and the plate by parallel shafts.

The pyrotechnic component of the piston can be activated when the vehicle suffers a collision or impact from the rear, causing the displacement of the piston plunger towards the position of maximum extraction from the casing or chamber, this action forcing the mobile front body to move to the position farthest from the fixed rear body.

The pyrotechnic piston allows adjusting the headrest inclination to place the mobile element in the most suitable position according to the characteristics or preferences of the user, and is also in charge of setting the mobile element in its position farthest from the fixed element by activating the pyrotechnic component in the event of a rear collision or impact.

The construction of the headrest assembly of the invention as well as its operation and the advantages derived thereof will be better understood in view of the following description, made with reference to the accompanying drawings where a non-limiting example of embodiment is shown.

In the drawings:
Figure 1 is an exploded perspective view of a headrest assembly constructed according to the invention.
Figure 2 is a schematic cross-section of the headrest assembly, mounted, without the padded element.
Figure 3 is a perspective view of the connecting rod between the frame and the mobile front body of the headrest assembly.

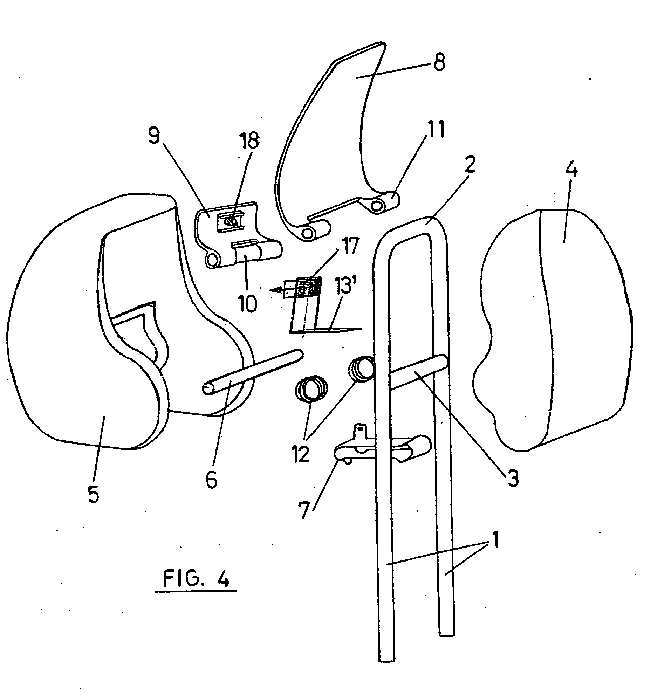

Figure 4 is a similar view to figure 1, showing a first alternative of embodiment.
Figure 5 is a side elevation of the support and the internal mechanisms of the headrest assembly of figure 4, in its position of minimum separation of the mobile front body from the fixed rear body.
Figure 6 is a similar view to figure 5, with the mechanisms in the position corresponding to a maximum separation of the mobile front body from the fixed rear body.
Figure 7 is a perspective view of the smaller plate included in the headrest assembly of figure 4, with the iron-bearing cone surrounded by an activation coif.
Figure 8 is a perspective view similar to figure 1, showing a second alternative embodiment.
Figure 9 is a schematic perspective view of the headrest assembly of figure, mounted, without the padded element.
Figure 10 is a similar view to figure 9, showing an alternative embodiment.

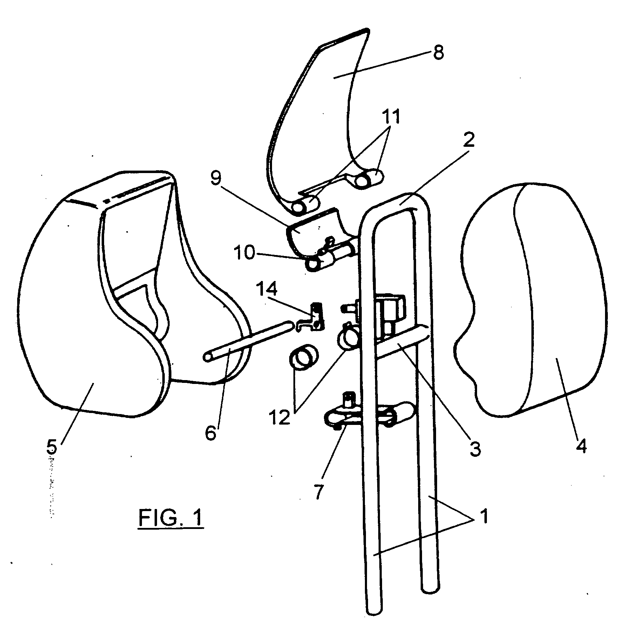

As can be seen in figure 1, the headrest assembly of the invention includes a frame consisting of two parallel columns, labelled with the number 1, which are joined on their upper end by an intermediate segment 2, determining an inverted-U shape, Located between the parallel segments or columns 1 is a crossbar 3. As is usual, the parallel segments or columns 1 are inserted in the back of the seat through top orifices made in said seat.

Mounted on the described frame is the padded element of the headrest assembly, which according to the invention consists of a fixed rear body labelled with the number 4, and a mobile front body 5.

The fixed rear body 4 is mounted on the frame formed by the columns 1 and the upper segment 2, while the mobile front body is mounted on a shaft 6 that is supported by the crossbar 3 of the frame by means of an intermediate connecting rod 7, which tightly embraces the crossbar 3 so that the body cannot rotate freely about the crossbar, thus requiring an effort to adjust manually the position of the mobile front body 5 (by adjusting the headrest shaft).

The mobile front body 5 includes a frame consisting of two plates, an external larger plate labelled with the number 8, which supports the padded element, and a smaller inner plate labelled with the number 9, which rests on the larger plate 8.
The smaller plate 9 conforms a tubular shaft 10 through which passes the horizontal shaft 6. The larger plate 8 conforms in turn tubular passages 11 on either side of the tubular shaft 10 and aligned with it, for passage of the horizontal shaft 6. In this way the two plates 8 and 9 are mounted on the same horizontal shaft 6.

The connecting rod 7 is mounted on the intermediate segment of the tubular shaft 10, embracing said tubular shaft. On either side of the connecting rod 7 and on the same tubular shaft 10 are mounted two torsion springs 12 connected on the one end to the smaller plate 9 and on the other end to the connecting rod 7, so that they constantly push the plate 9 towards the plate 8, and the assembly of the two plates and the padded element mounted on them towards a position of maximum separation with respect to the fixed rear body 9 of the headrest assembly.

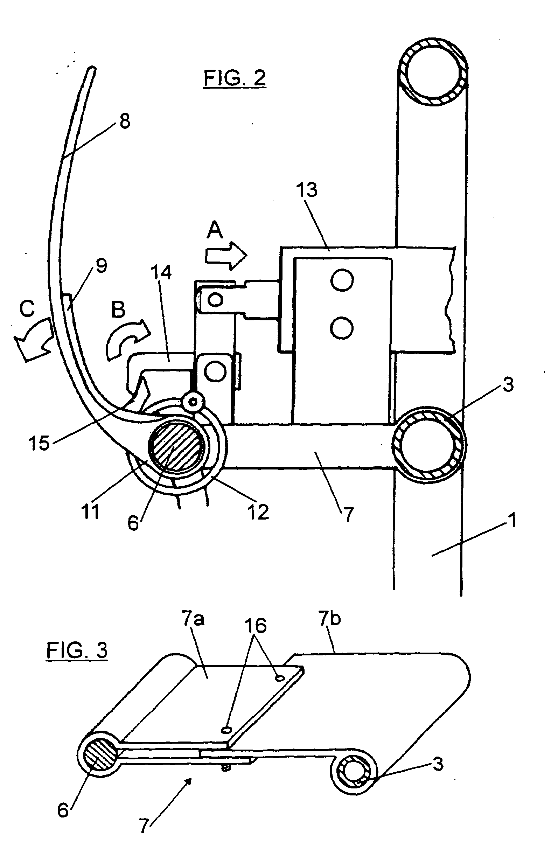

The connecting rod 7 defines a platform in which an electromagnet 13 is mounted, which as can be seen best in figure 2 is in charge of actuating a hook 14 capable of acting on a tooth 15 which forms part of the smaller plate 9 in order to retain the latter, together with the larger plate 8, in a position of maximum proximity to the fixed rear body 4.

The plates 8 and 9, together with the padded element, are constantly pushed towards the position of maximum separation from the fixed rear body 4 by the torsion springs 12. In the position shown in figure 2, the plates 8 and 9 and the padded element are in their position of greatest proximity to the fixed rear body 4, as the smaller plate 9 is retained by the hook 14.

If there is a rear collision, this will be detected by sensors which will send a signal to the vehicle's electronic processor. If this signal is within certain activation ranges the processor will send the corresponding signal to the electromagnet 13, whose core will move in the direction A of figure 2, thereby turning the hook 14 in the direction B to release the tooth 15, the plates 8 and 9 then swivelling in the direction of the arrow C to carry the padded element quickly towards the user's head.

When the head meets the mobile front body 5, its inertia in a direction opposite to that of travel will make it push against the said front body 5 and the plates 8 and 9, again turning the springs 12 to their initial position in which the tooth 15 will once again be retained by the hook 14, thus leaving the headrest ready for subsequent activation as many times as may be necessary.

One alternative can consist in that after the electromagnet 13 has been activated and the mobile front body 5 has been displaced towards the user's head, said body is fixed in the position of maximum separation from the fixed rear body 4. At the moment in which the head meets the mobile front body 5 the entire headrest structure, together with the back of the seat, will absorb the energy carried by the head. After activation it will be necessary to use a special tool or to take the automobile to a specialised garage in order to rearm the headrest and leave it ready for a new activation. Despite this, the system would still be reversible, as no damaged parts have to be replaced.

The connecting rod 7 can be a single piece or, as shown in figure 3, comprise two parts 7a and 7b joined by any system, such as screws 16. The electromagnet 13, not shown, will be mounted on the segment 7b.

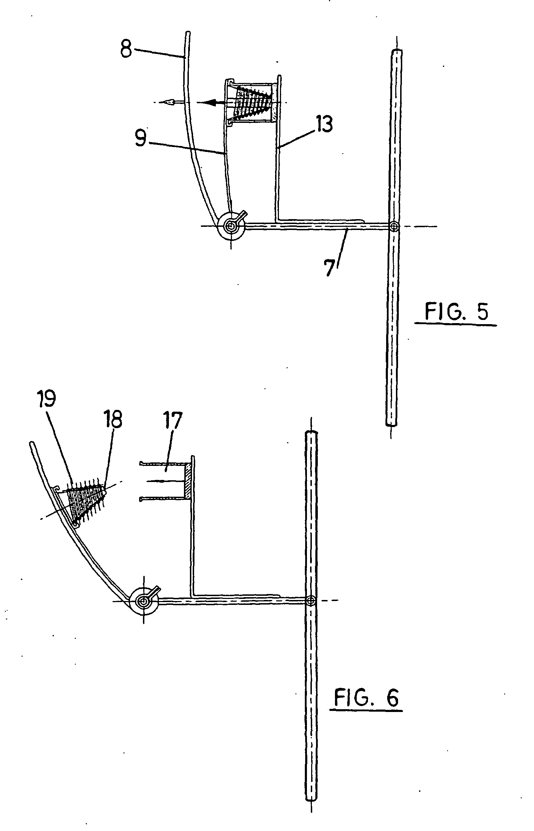

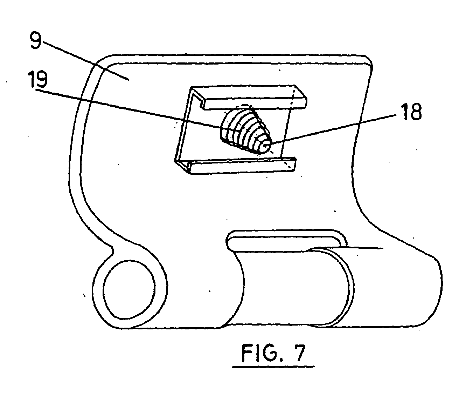

In the embodiment of figures 5 to 7 the mobile front body is mounted on the shaft 6, which is supported by the crossbar 3 of the frame by means of the intermediate connecting rod 7, which tightly embraces the crossbar 3 so that said connecting rod cannot revolve about the crossbar, requiring an effort to carry out the manual adjustment of the position of the mobile front body 5 (adjusting the inclination of the headrest).

Mounted on said connecting rod 7 by means of a small support 13" is a cup-shaped electromagnet 17, in which fits a metal cone 18 mounted above the smaller plate 9 and surrounded by an activation coil 19. This magnet is in charge of retaining the smaller plate 9 in its position of maximum proximity to the fixed rear body by the action of its magnetic field.

If there is a rear collision, this will be detected by sensors which will send a signal to the vehicle's electronic processor. If this signal is within certain activation ranges the processor will send the corresponding signal to the coil 19 mounted around the cone 18, creating a magnetic field with an opposite sign to that of the magnet so that the force exerted by the torsioned springs is larger than that exerted by the magnet, releasing the smaller plate, which carries with it the padded element quickly towards the farthest position from the fixed rear body 4 and thus to its nearest position to the user's head.

At the moment in which the head meets the mobile front body 5, because of its inertia in a direction opposite to the direction of travel it will push against the front body 5 and the plates 8 and 9, again torsioning the springs 12 to their initial position in which the metal cone 18 is inserted in the magnet 17 and will again be retained by its magnetic field, thereby leaving the headrest ready to be activated as many times as may be necessary. One alternative can consist in that after the magnet has been neutralised and the mobile front body 5 has been displaced towards the user's head, said body is fixed in the position of maximum separation from the fixed rear body 4. When the head meets the mobile front body 5 the entire headrest structure, as well as the seat back, will absorb the energy carried by the head.

After activation it will be necessary to use a special tool or to take the automobile to a specialised garage in order to rearm the headrest and leave it ready for a new activation.

Despite this, the system would still be reversible as no damaged parts have to be replaced.

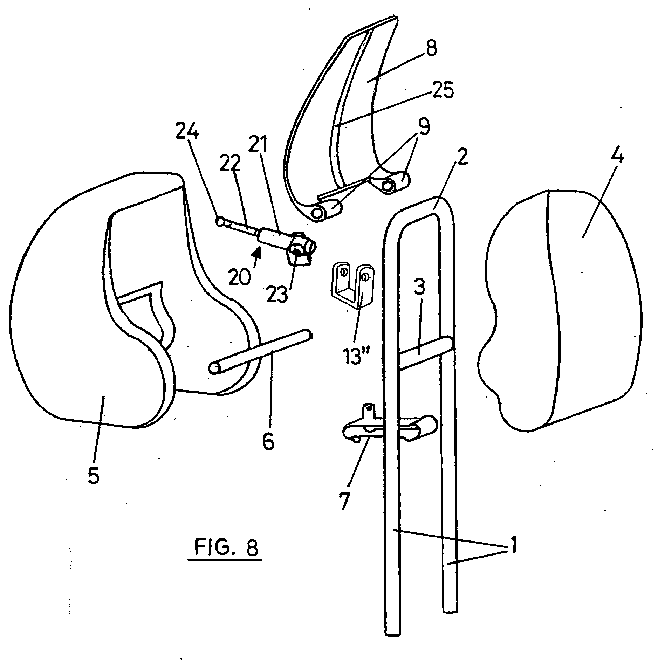

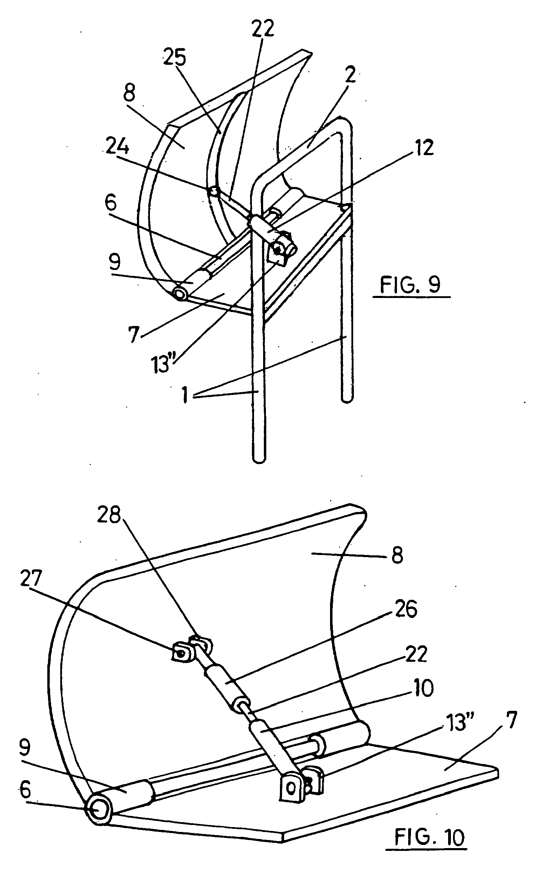

In the example shown in figures 8 and 10, the mobile front body 5 includes a frame comprised of a single plate 8 which supports the padded element. This plate conforms tubular passages 9 for passage of the horizontal shaft 6; said plate can be fixed to the shaft so that it cannot revolve about it, or be mounted tightly on said shaft. Thus, the plate 8 is mounted on the horizontal shaft 6 so that a certain effort is required to make it swivel about said shaft.

On the connecting rod 7, which acts as a platform, is a telescoping pyrotechnic piston 20 mounted by means of a support 13" which is joined to said connecting rod. The pyrotechnic piston 20 consists of a casing or chamber 21 where the pyrotechnic component is housed and a plunger 22 axially displaceable in the chamber 21. Assembly of the piston in the support 13" is achieved by the chamber 21, by means of a hinged shaft 23 parallel to the shaft 6. The plunger 22 can end at its external end in a freely revolving sphere 24.

The plate 8 is provided on its surface opposite the pyrotechnic piston 20 with a vertical groove 25 that defines a guide on which rests the free end of the plunger 22, on the sphere 24 that determines a bearing.
If there is a rear collision, this will be detected by sensors which send a signal to the vehicle's electronic processor. If this signal is within certain activation ranges the processor will send the corresponding signal to the pyrotechnic component housed in the chamber 21 of the piston 20, causing its ignition and thereby the displacement of the plunger 22 towards the outside of the chamber 21, until reaching the position of maximum extraction. In this motion the plunger 22 pushes the plate 8, the sphere 24 moving along the groove or guide 25, thereby carrying with it the padded element quickly until it reaches its farthest position to the fixed rear body 4 and, consequently its nearest position to the user's head, with this position being fixed.

When the head meets the padded element the entire headrest structure together with the seat back will absorb the energy carried by the head.

After activation it will be necessary to take the automobile to a specialised garage to replace the pyrotechnic piston 20 or to include the required pyrotechnic component in it in order to rearm the headrest and leave it ready for a new activation.

According to the example of embodiment shown in figure 10, the pyrotechnic piston can be jointed between the plate 8 and the support 13' of the connecting rod 7. For this, for example, the plunger 22 of the piston 20 can be housed in an undeformable sheath or bushing 26, which would be hinged to the plate 8 by a shaft 27, parallel to the shaft 23 hinging the piston to the support 13', which crosses lugs 28 joined to the plate 8.

## Claims

1. Headrest assembly for automobile seats, said head rest assembly comprising two parallel columns (1) mounted on the seat back, which columns bear a padded element for supporting the head, said padded element consisting of a fixed rear body (4) and a mobile front body (5), wherein the front body (5) can swivel about a horizontal shaft (6) between positions of maximum proximity to and maximum separation from the fixed rear body (4), said horizontal shaft being adapted to be fitted between the parallel columns (1) by means of a crossbar (3) and a connecting rod (7), the headrest assembly incorporating retaining means for retaining the mobile front body (5) in a position of maximum proximity to the fixed rear body (4) and driving means for driving said mobile front body towards the position of maximum separation from the rear body, **characterised in that** the mobile front body (5) includes a frame comprising two plates (8-9) mounted on the same swiveling horizontal shaft (6), i.e. a larger outer plate (8) which supports the padded element and a smaller inner plate (9) which rests on the larger plate, which smaller plate conforms a tubular shaft (10) inside which (10) funs the swiveling horizontal shaft (6) to which is connected the connecting rod (7) and at least one torsion spring (12), one of the ends of said spring being connected to the smaller plate (9) and the other one of said ends being connected to the connecting rod (7).

2. Headrest assembly according to claim 1, **characterised in that** the retaining means for retaining the front body (5) comprise a locking hook (14) and an actuation electromagnet (13), which are mounted on the connecting rod (7), and a tooth (15) which forms part of the smaller inner plate (9) of the front body (5), said tooth (15) being arranged to be engaged by the hook, which is actuated by the electromagnet (13).

3. Headrest assembly according to claim 1, **characterised in that** the retaining means for retaining the mobile front body (5) in the position of minimum separation from the fixed rear body (4) comprise a magnet (17) mounted on the connecting rod (7) and an iron-bearing core (18) which forms part of the mobile front body (5) and is located opposite the aforementioned magnet, the iron-bearing core (18) being surrounded by a coil (19) which, when activated, creates a magnetic field of equal or larger strength and opposite sign to that of the magnet, in order to counteract its effect and allow the separation of the iron-bearing core.

4. Headrest assembly according to claim 3, **characterised in that** the magnet (17) has a cup-shaped configuration, inside which is coupled the iron-bearing core (18) when the mobile front body (5) of the headrest assembly is in its position of minimum separation from the fixed rear body (4).

5. Headrest assembly according to claim 3, **characterised in that** the iron-bearing core (18) is mounted on the smaller inner plate (9).

6. Headrest assembly according to claim 1, **characterised in that** the retaining means for retaining the mobile front body (5) in the position of minimum separation for the fixed rear body (4), are located in the connecting rod (7), said connecting rod (7) embracing tightly the horizontal shaft (6) and the crossbar (3) in such a way that the friction between them prevents the free swiveling of the mobile front body (5); and **in that** the driving means for driving said mobile front body comprise a pyrotechnic piston (20) mounted between the connecting rod (7) and the larger outer plate (8), said pyrotechnic piston (20) comprising a pyrotechnic component, a casing or chamber (21) and a plunger (22) which is axially displaceable along the chamber, said chamber (21) being connected to the connecting rod (7) by a hinge shaft (23) parallel to the swiveling horizontal shaft (6), and the plunger (22) being connected to the mobile front body (5), which it (22) pushes, making said mobile front body (5) swivel when the pyrotechnic component is activated.

7. Headrest assembly according to claim 6, **characterised in that** the larger outer plate (8), through which the mobile front body (5) is mounted on the swiveling horizontal shaft (6), is provided, on its front surface, with a vertical groove (25) defining a guide on which rests the end of the plunger (22).

8. Headrest assembly according to claim 6, **characterised in that** the plunger (22) of the pyrotechnic piston (20) is provided, on its free external end, with a freely revolving sphere (24), which determines a bearing by which said plunger (22) rests on the guide (25) of the mobile front body(5).

9. Headrest assembly according to claim 6, **characterised in that** the portion of the plunger (22) projecting outside of the chamber (21) is housed in a sleeve or bushing (26) which is hinged to the larger outer plate (8) of the mobile front body (5) by means of a shaft (27) parallel to the hinge shaft (23).

## Patentansprüche

1. Kopfstützenanordnung für Autositze
- mit zwei parallelen, an der Rückenlehne angebrachten Säulen (1), die zum Abstützen des Kopfes ein gepolstertes Element tragen, das aus einem festgelegten hinteren Körper (4) und einem beweglichen vorderen Körper (5) besteht,
-- wobei der vordere Körper (5) um eine horizontale Achse (6) zwischen Positionen einer maximalen Nähe zu dem festgelegten hinteren Körper (4) und einer maximalen Trennung von ihm schwenken kann, und
-- wobei die horizontale Achse zwischen die parallelen Säulen (1) mit Hilfe einer Querstange (3) und eines Verbindungsstabs (7) einpassbar ist,
- mit Halteinrichtungen zum Halten des beweglichen vorderen Körpers (4) in der Position maximaler Nähe zu dem festgelegten hinteren Körper (4) und
- mit Bewegungseinrichtungen zum Bewegen des beweglichen vorderen Körpers zur Position maximaler Trennung von dem hinteren Körper,
**dadurch gekennzeichnet,**
- **dass** der bewegliche vordere Körper (5) einen Rahmen mit zwei Platten (8, 9) hat, die an der gleichen, zum Verschwenken vorgesehenen horizontalen Achse (6) angebracht sind, d.h. eine größere äußere Platte (8), die das gepolsterte Element trägt, und eine kleine innere Platte (9), die auf der größeren Platte liegt,
- wobei die kleinere Platte zu einem rohrförmigen Schaft (10) konform ist, in welchem die für das Verschwenken vorgesehene horizontale Achse (6) verläuft, mit der der Verbindungsstab (7) und wenigstens eine Torsionsfeder (12) verbunden ist,
- wobei eines der Enden der Feder mit der kleineren Platte (9) verbunden ist und
- wobei das andere der Enden mit dem Verbindungsstab (7) verbunden ist.

2. Kopfstützenanordnung nach Anspruch 1, **dadurch gekennzeichnet, dass** die Halteeinrichtung zum Halten des vorderen Körpers (5)
- einen Arretierhaken (14) und einen Elektromagneten (13) für die Betätigung, die an dem Verbindungsstab (7) angebracht sind, und
- einen Zahn (15) aufweist, der einen Teil der kleineren inneren Platte (9) des vorderen Körpers (5) bildet und für einen Eingriff durch den Haken angeordnet ist, der von dem Elektromagneten (13) betätigt wird.

3. Kopfstützenanordnung nach Anspruch 1, **dadurch gekennzeichnet,**
- **dass** die Halteeinrichtung zum Halten des beweglichen vorderen Köpers (5) in der Position der maximalen Trennung von dem festgelegten hinteren Körper (4) einen an dem Verbindungsstab (7) angebrachten Magneten (17) und einen eisentragenden Kern (18) aufweist, der einen Teil des beweglichen vorderen Körpers (5) bildet und gegenüber dem vorstehend erwähnten Magneten angeordnet ist,
- wobei der eisentragende Kern (18) von einer Spule (19) umschlossen ist, die, wenn sie aktiviert wird, ein Magnetfeld, das bezogen auf das des Magneten die gleiche oder größere Stärke und entgegengesetztes Vorzeichen hat, um seiner Wirkung entgegenzuwirken und um die Trennung des eisentragenden Kerns zu ermöglichen.

4. Kopfstützenanordnung nach Anspruch 3, **dadurch gekennzeichnet, dass** der Magnet (17) eine becherförmige Gestalt hat, innerhalb der der eisentragende Kern (18) gekoppelt ist, wenn der mobile vordere Körper (5) der Kopfstützenanordnung sich in seiner Position der minimalen Trennung von dem festgelegten hinteren Körper (4) befindet.

5. Kopfstützenanordnung nach Anspruch 3, **dadurch gekennzeichnet, dass** der eisentragende Kern (18) an der kleineren inneren Platte (9) angebracht ist.

6. Kopfstützenanordnung nach Anspruch 1, **dadurch gekennzeichnet,**
- **dass** die Halteeinrichtung zum Halten des beweglichen vorderen Körpers (5) in der Position der minimalen Trennung für den festgelegten hinteren Körper (4) in dem Verbindungsstab (7) angeordnet ist,
- **dass** der Verbindungsstab (7) die horizontale Achse (6) und den Querträger (3) fest umschließt, so dass die Reibung zwischen ihnen ein freies Schwenken des beweglichen vorderen Körpers (5) verhindert,
- **dass** die Bewegungseinrichtung zum Bewegen des beweglichen vorderen Körpers einen pyrotechnischen Kolben (20) aufweist, der zwischen dem Verbindungsstab (7) und der größeren äußeren Platte (8) angebracht ist,
- **dass** der pyrotechnische Kolben (20) eine pyrotechnische Komponente, ein Gehäuse oder eine Kammer (21) und einen Stößel (22) aufweist, der längs der Kammer axial verschiebbar ist,
- **dass** die Kammer (21) mit dem Verbindungsstab (7) durch einen Scharnierschaft (23) verbunden ist, der parallel zu der für das Verschwenken vorgesehenen horizontalen Achse (6) ist, und
- **dass** der Stößel (22) mit dem beweglichen vorderen Körper (5) verbunden ist, gegen den er (22) drückt und den beweglichen vorderen Körper (5) schwenken lässt, wenn die pyrotechnische Komponente aktiviert wird.

7. Kopfstützenanordnung nach Anspruch 6, **dadurch gekennzeichnet, dass** die größere äußere Platte (8), über die der bewegliche vordere Körper (5) an der für das Verschwenken vorgesehenen horizontalen Achse (6) angebracht ist, an seiner vorderen Fläche mit einer vertikalen Nut (25) versehen ist, die eine Führung bildet, auf der das Ende des Stößels (22) liegt.

8. Kopfstützenanordnung nach Anspruch 6, **dadurch gekennzeichnet, dass** der Stößel (22) des pyrotechnischen Kolbens (20) an seinem freien äußeren Ende mit einer frei drehenden Kugel (24) versehen ist, die ein Lager bildet, über das der Stößel (22) an der Führung (25) des beweglichen vorderen Gehäuses (5) anliegt.

9. Kopfstützenanordnung nach Anspruch 6, **dadurch gekennzeichnet, dass** der Teil des Stößels (22), der nach außen aus der Kammer (21) vorsteht, in einer Hülse oder Büchse (26) aufgenommen ist, die an der größeren äußeren Platte (8) des beweglichen vorderen Körpers (5) mit Hilfe einer Achse (27) angelenkt ist, die parallel zu dem Scharnierschaft (23) ist.

## Revendications

1. Ensemble d'appui-tête pour sièges d'automobile, ledit ensemble d'appui-tête comprenant deux colonnes parallèles (1) montées sur le dossier de siège, lesquelles colonnes supportent un élément rembourré pour supporter la tête, ledit élément rembourré étant constitué d'un corps arrière fixe (4) et d'un corps avant mobile (5), dans lequel le corps avant (5) peut pivoter autour d'un axe horizontal (6) entre des positions de proximité maximum et de séparation maximum par rapport au corps arrière fixe (4), ledit axe horizontal étant adapté pour être installé entre les colonnes parallèles (1) au moyen d'une barre transversale (3) et d'une bielle de liaison (7), l'ensemble d'appui-tête incorporant des moyens de retenue pour retenir le corps avant mobile (5) dans une position de proximité maximum par rapport au corps arrière fixe (4) et des moyens d'entraînement pour entraîner ledit corps avant mobile vers la position de séparation maximum par rapport au corps arrière, **caractérisé en ce que** le corps avant mobile (5) comprend un cadre comprenant deux plaques (8, 9) montées sur le même axe horizontal de pivotement (6), c'est-à-dire une plaque extérieure de taille plus importante (8) qui supporte l'élément rembourré et une plaque intérieure de taille plus petite (9) qui repose sur la plaque de taille plus importante, laquelle plaque de taille plus petite comporte un arbre tubulaire (10) à l'intérieur duquel (10) passe l'axe horizontal de pivotement (6) auquel est reliée la bielle de liaison (7) et au moins un ressort de torsion (12), une des extrémités dudit ressort étant reliée à la plaque de taille plus petite (9) et l'autre desdites extrémités étant reliée à la bielle de liaison (7).

2. Ensemble d'appui-tête selon la revendication 1, **caractérisé en ce que** les moyens de retenue pour retenir le corps avant (5) comprennent un crochet de verrouillage (14) et un électroaimant d'actionnement (13), qui sont montés sur la bielle de liaison (7), et une dent (15) qui fait partie de la plaque intérieure de taille plus petite (9) du corps avant (5), ladite dent (15) étant agencée pour être engagée par le crochet, qui est actionné par l'électroaimant (13).

3. Ensemble d'appui-tête selon la revendication 1, **caractérisé en ce que** les moyens de retenue pour retenir le corps avant mobile (5) dans la position de séparation minimum par rapport au corps arrière fixe (4) comprennent un aimant (17) monté sur la bielle de liaison (7) et un noyau contenant du fer (18) qui fait partie du corps avant mobile (5) et est positionné en face de l'aimant susmentionné, le noyau contenant du fer (18) étant entouré par une bobine (19) qui lorsqu'elle est activée crée un champ magnétique de force égale ou supérieure et de signe opposé à celle/celui de l'aimant, afin de contrer son effet et de permettre la séparation du noyau contenant du fer.

4. Ensemble d'appui-tête selon la revendication 3, **caractérisé en ce que** l'aimant (17) possède une configuration en forme de coupelle, à l'intérieur de laquelle est couplé le noyau contenant du fer (18) lorsque le corps avant mobile (5) de l'ensemble d'appui-tête est dans sa position de séparation minimum par rapport au corps arrière fixe (4).

5. Ensemble d'appui-tête selon la revendication 3, **caractérisé en ce que** le noyau contenant du fer (18) est monté sur la plaque intérieure de taille plus petite (9).

6. Ensemble d'appui-tête selon la revendication 1, **caractérisé en ce que** les moyens de retenue pour retenir le corps avant mobile (5) dans la position de séparation minimum par rapport au corps arrière fixe (4), sont positionnés dans la bielle de liaison (7), ladite bielle de liaison (7) entourant l'axe horizontal (6) et la barre transversale (3) de façon serrée de manière telle que le frottement entre eux empêche le pivotement libre du corps avant mobile (5) ; et **en ce que** les moyens d'entraînement pour entraîner ledit corps avant mobile comprennent un piston pyrotechnique (20) monté entre la bielle de liaison (7) et la plaque extérieure de taille plus importante (8), ledit piston pyrotechnique (20) comprenant un composant pyrotechnique, un boîtier ou une chambre (21) et un piston plongeur (22) qui est déplaçable de façon axiale le long de la chambre, ladite chambre (21) étant reliée à la bielle de liaison (7) par un axe d'articulation (23) parallèle à l'axe horizontal de pivotement (6), et le piston plongeur (22) étant relié au corps avant mobile (5), qui le (22) pousse, faisant pivoter ledit corps avant mobile (5) lorsque le composant pyrotechnique est activé.

7. Ensemble d'appui-tête selon la revendication 6, **caractérisé en ce que** la plaque extérieure de taille plus importante (8), à travers laquelle le corps avant mobile (5) est monté sur l'axe horizontal de pivotement (6), est pourvue, sur sa surface avant, d'une rainure verticale (25) définissant un guidage sur lequel repose l'extrémité du piston plongeur (22).

8. Ensemble d'appui-tête selon la revendication 6, **caractérisé en ce que** le piston plongeur (22) du piston pyrotechnique (20) est pourvu, sur son extrémité externe libre, d'une sphère librement rotative (24), qui détermine un appui par l'intermédiaire duquel ledit piston plongeur (22) repose sur le guidage (25) du corps avant mobile (5).

9. Ensemble d'appui-tête selon la revendication 6, **caractérisé en ce que** la partie du piston plongeur (22) faisant saillie à l'extérieur de la chambre (21) est logée dans un manchon ou une douille (26) qui est articulé(e) sur la plaque extérieure de taille plus importante (8) du corps avant mobile (5) au moyen d'un axe (27) parallèle à l'axe d'articulation (23).
